Europäisches Patentamt

European Patent Office

Office européen des brevets

(11) Publication number: **0 310 188 B1**

# EUROPEAN PATENT SPECIFICATION

(45) Date of publication of patent specification: **27.12.91**  (51) Int. Cl.5: **F24H 9/00**, F24C 15/00

(21) Application number: **88202101.7**

(22) Date of filing: **27.09.88**

(54) Device for removing condensation from flue gases.

(30) Priority: **28.09.87 NL 8702315**

(43) Date of publication of application:
**05.04.89 Bulletin 89/14**

(45) Publication of the grant of the patent:
**27.12.91 Bulletin 91/52**

(84) Designated Contracting States:
**BE DE LU NL**

(56) References cited:
**EP-A- 0 190 394**

(73) Proprietor: **MUELINK & GROL B.V.**
**P.O. Box 509 Duinkerkenstraat 27**
**NL-9700 AM Groningen(NL)**

(72) Inventor: **Beekman, Anton**
**Zuideinde 36**
**NL-8428 HG Fochteloo(NL)**

(74) Representative: **Baarslag, Aldert D. et al**
**Nederlandsch Octrooibureau Schevening-**
**seweg 82 P.O. Box 29720**
**NL-2502 LS 's-Gravenhage(NL)**

## Description

The invention relates to a device for removing condensation from flue gases, in particular in the case of a central heating boiler, said device being intended for fitting in an essentially horizontally running part of the discharge pipe for flue gases, which device is in the form of a T-shaped pipe section with the centre leg of the T pointing downward, said leg serving to discharge the condensation which has collected in the discharge pipe downstream of the device.

Such a device is known from EP-A-0 190 394. In particular in a central heating boiler with a high efficiency of more than 83% it is necessary to remove the condensation from the flue gases before they reach the chimney.

The device according to the invention is characterized in that on the inner side of the horizontal legs of the T there is a deflecting flange for the condensation situated directly opposite the vertical leg of the T and extending over more than the top half of the circumference of the horizontal legs and at a point where said horizontal legs are widened.

The flue gases coming from the boiler flow through the horizontal legs of the T and then through the generally very long discharge pipe to the chimney. In practice, this discharge pipe is at least 5 metres long and is generally made of aluminium.

While the flue gases are moving through this pipe the condensation moisture will precipitate through cooling on the wall of said pipe and will flow down to the T-shaped device.

The condensation is then discharged through the centre leg to the sewer after deflection by the deflecting flange.

The invention will be explained in greater detail with reference to the drawing, in which:

Fig. 1 shows schematically the device according to the invention,

Fig. 2 shows said device on a larger scale.

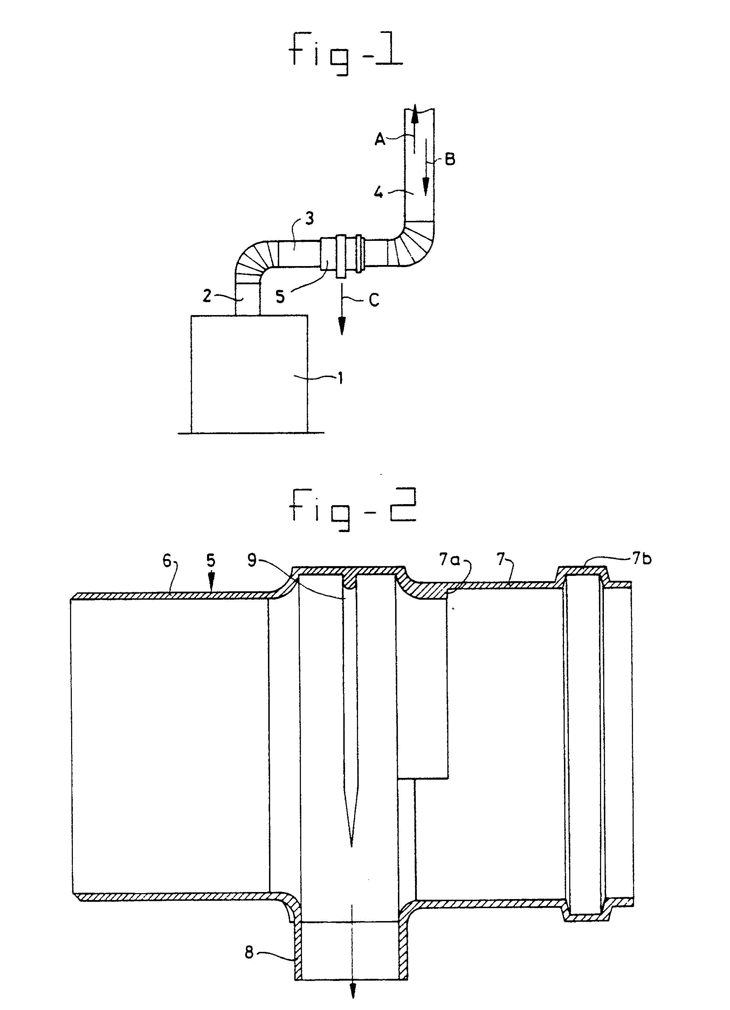

Fig. 1 Fig. 1 shows a high-efficiency central heating boiler 1. Connected to it is a discharge pipe for flue gases, comprising a short vertical part 2, a horizontal part 3, and a long vertical part 4, which ends in the chimney opening (not shown). The pipe 2, 3, 4 is generally made of aluminium.

In the horizontal pipe part 3 the device according to the invention is shown by 5, said device being shown on a larger scale in fig. 2.

This device 5 is a T shape, with two horizontal legs 6 and 7, and a vertical leg 8 pointing downward. The device 5 is fitted in the horizontal pipe part 3, the left pipe part being slid over the leg 6, and the right pipe part in leg 7, which for this purpose is provided with a stop edge 7a and a protuberance 7b to take a seal, which is not shown.

The part between the legs 6 and 7 opposite the discharge leg 8 is widened and has a deflecting flange 9 over a large part of the inner periphery. Said deflecting flange 9 extends at least along the top half of the inner periphery of the widened part, thus covering an angle of 180 degrees, but it can extend over a maximum of an angle of about 270 degrees. In fig. 1 an arrow A indicates the direction in which the flue gases move from the boiler 1 to the chimney, which is not shown. The pipe part 4 is generally at least 5 metres long in practice.

The water vapour in the flue gases will condense in the pipe part 4 through cooling on the wall, and will flow downwards in the direction of the arrow B. The condensation will leave the device 5 through the leg 8 in the direction of the arrow C.

The deflecting flange 9 ensures that moisture moving along the wall is directed downwards in the direction of the arrow C.

The device 5 according to the invention is preferably made of aluminium and is very simple and thus cheap.

Of course, it is not necessary for the bend between pipe part 3 and pipe part 4 to lie directly downstream of the device 5. The pipe part 3 between the device 5 and the pipe part 4 can also be much longer.

## Claims

1. Device for removing condensation from flue gases, in particular in the case of a central heating boiler, said device being intended for fitting in an essentially horizontally running part of the discharge pipe for flue gases, which device is in the form of a T-shaped pipe section (5) with the centre leg (8) of the T pointing downward, said leg (8) serving to discharge the condensation which has collected in the discharge pipe downstream of the device, **characterized** in that on the inner side of the horizontal legs (6, 7) of the T (5) there is a deflecting flange (9) for the condensation situated directly opposite the vertical leg of the T (5) and extending over more than the top half of the circumference of the horizontal legs (6, 7) and at a point where said horizontal legs are widened.

## Revendications

1. Appareil pour enlever l'eau de condensation des gaz et fumées de combustion, en particulier pour une chaudière de chauffage central, ledit appareil étant prévu pour être inséré dans une partie courante essentiellement horizontale du tube d'évacuation des gaz et fumées, appareil se présentant sous la forme d'un tronçon de tube en T dans lequel la branche centrale (8) du T est dirigée vers le bas, ladite branche centrale (8) servant à l'évacuation de la condensation récupérée dans le tube d'évacuation en aval de l'appareil, caractérisé en ce qu'à l'intérieur des branches horizontales (6,7) du T (5) se trouve un déflecteur-flasque (9) pour la condensation, situé à l'opposé de la branche verticale du T (5) et s'étendant au-delà de la moitié de la circonférence des branches horizontales (6,7), à un endroit où ces branches horizontales sont évasées.

**Patentansprüche**

1. Vorrichtung zum Entfernen von Kondensaten aus Rauchgasen, insbesondere im Fall von einem Zentralheizungskessel, wobei die Vorrichtung vorgesehen ist zum Einpassen in einem im wesentlichen horizontal verlaufenden Teil des Abgaberohrs für Rauchgase, wobei die Vorrichtung in Form eines T-förmigen Rohrabschnitts (5) vorliegt, wobei der zentrale Arm (8) des T nach unten weist, der Arm (8) zum Abgeben der Kondensate dient, die in dem Abgaberohr unterhalb der Vorrichtung angesammelt worden sind, **dadurch gekennzeichnet,** daß an der Innenseite der waagerechten Arme (6, 7) des T (5) ein Ablenk-Flansch (9) für die Kondensate vorhanden ist, der direkt gegenüber dem vertikalen Arm des T (5) angeordnet ist und sich über mehr als die obere Hälfte des Umfangs der waagerechten Arme (6, 7) und an einer Stelle, an der die waagerechten Arme verbreitert sind, erstreckt.

# fig-1

# fig-2